# EUROPEAN PATENT SPECIFICATION

(11) **EP 2 675 564 B1**
(45) Date of publication and mention of the grant of the patent: **25.03.2026**
(21) Application number: 11711110.4
(22) Date of filing: 15.02.2011
(51) Int. Cl.: B02C 21/02, B65G 37/00, B65G 41/00, B65G 47/20, B02C 23/02

(54) **MOVABLE PROCESS DEVICE FOR MINERAL MATERIAL PROCESSING**
BEWEGLICHE BEARBEITUNGSVORRICHTUNG FÜR MINERALISCHE MATERIALBEARBEITUNG
DISPOSITIF DE TRAITEMENT MOBILE POUR TRAITEMENT DE MATIÈRES MINÉRALES

(43) Date of publication of application: 25.12.2013
(60) Divisional application: 15182626.0
(73) Proprietor: Metso Finland Oy, 02230 Espoo (FI)
(72) Inventor: HÖRKKÖ, Timo, FI-37830 Viiala (FI); ASIKAINEN, Mikko, FI-33580 Tampere (FI); ÖVERMARK, Pasi, FI-36220 Kangasala (FI); TUOKKO, Tuomas, FI-33720 Tampere (FI)
(74) Representative: Espatent Oy
(86) International application number: PCT/FI2011/050139
(87) International publication number: WO 2012/110679

(56) References cited:
- EP-A1- 0 419 423
- EP-A2- 1 110 625
- EP-A2- 1 110 625
- EP-A2- 1 110 625
- WO-A1-2004/087324
- WO-A1-2006/051165
- WO-A1-2006/051165
- WO-A1-2006/051165
- DE-A1- 102008 060 459
- DE-A1- 102008 060 459
- DE-A1- 102008 060 459
- DE-C1- 3 709 375
- DE-C1- 3 709 375
- JP-A- 2009 125 717
- JP-A- 2009 125 717
- US-A- 2 564 020
- US-A1- 2006 016 104

## Description

### FIELD OF THE INVENTION

The invention relates to a movable processing apparatus suitable for processing mineral material. Specifically, but not exclusively, the invention relates to a mineral material processing apparatus comprising a side conveyor device and which is suitable for crushing, pre-screening, screening and/or further conveying of mineral material.

### BACKGROUND OF THE INVENTION

Rock to be crushed is obtained from the earth either by blasting or excavating. The rock may also be natural rock and gravel, or construction waste. For processing (for example, crushing) the material, both movable processing devices (for example, crushing devices) and fixed crushing applications are used. The substance to be processed is fed, for example, by an excavator or wheel loader into the feed hopper of the processing device from which the substance to be processed ends up in the feeder which feeds the material, for example, into the mouth of the crusher, or the feeder moves the rock substance towards the crusher. The desired material, for example, fine substance, can be guided through the feeder to the side conveyor in order that this material does not end up to be further processed, for example, to be crushed. The ordinary placement of the side conveyor is below the feeder where the selected material can fall. The material guided by the side conveyor past further processing is transported beside the processing device, for example, as a pile.

In movable crushing apparatuses, for example, the side conveyor forms during transportation a barrier widening the crushing apparatus, one which must, at least in road traffic, be placed into a narrower space than the operating position of the side conveyor. The side conveyor is generally folded to the side of the machine during transportation, for example, hydraulically upwards into a vertical position. In this case, the conveyor is, for example, a model that folds in the area of the conveyor belt. Another alternative is to transport the side conveyor separately.

If there is a desire to change the discharge direction of the side conveyor to the other side of the machine, the side conveyor is entirely detached from its fastening points, for example, by opening and fastening the bolt fastening of the side conveyor. The hydraulic hoses are detached, the conveyor is lifted away from the hole of the side plate of the machine, transported to the other side of the machine, and reinstalled. An alternative in current machines is that the side of the side conveyor cannot be changed.

In the structure of a side conveyor to be folded to the side of the crushing apparatus are used hydraulic cylinders and joints which enable the placement of the side conveyor to the side of the crushing apparatus. This structure is complicated, expensive and fault-prone. Both transporting the side conveyor separately and changing the side are time-consuming. A lifting device is required on site, as well as adequate means to assist with the lifting. Lifting work is a safety risk and requires several workers. Hydraulic hoses and electric cables must also be detached, both when transporting separately and when changing the side, which creates safety risks for persons and the environment.

An object of the invention is to provide a movable mineral material processing apparatus, in connection with which the disadvantages relating to known side conveyors can be obviated or at least decreased.

DE3709375C discloses, according to a machine translated abstract title, a crushing installation for overburden.

EP1110625A2 discloses, according to its title, an improved aggregate processing plant.

WO2006051165A1 discloses, according to its title, a frame of a movable processing device of mineral materials, and a multi-purpose fastening.

JP2009125717A , according to a machine translated abstract title, a drive control apparatus of crushing machine and drive control method of crushing machine.

DE102008060459A1, according to its title given by Australian family member AU2009321716A1, a mobile crusher.

### SUMMARY

According to the invention, a movable processing device for processing mineral material is provided as defined by appended claim 1.

Preferably, the side conveyor is pivotable from at least the first side of the frame, to a direction of the frame into the transportation position such that the transportation width of the processing device is not exceeded. The transportation width is preferably the transportation width of a vehicle to be transported in road traffic without an abnormal transport permit. Ordinarily, movable processing devices are dimensioned at their widest point (for example, the frame, the tracks or the tyres) within this transportation width.

Preferably, the side conveyor is pivotable into operating positions to the first side of the frame and to the second side of the frame, as well as to a pivoting sector between the first and second sides.

Preferably, a horizontal pivoting sector of the side conveyor is 180 degrees.

Preferably, the pivot joint comprises a lower part fastened to the frame, and an upper part bearing-mounted to the lower part to which the side conveyor is fastened. Preferably, the lower part comprises a housing, and the upper part comprises a shaft which is slide bearing mounted in the housing. Preferably, between the housing of the lower part and the shaft of the upper part there is fitted a slide bearing bushing, the first axis of symmetry of which, defined by the external sliding surfaces, and the second axis of symmetry of which, defined by the internal sliding surfaces, are at an angular position with each other, and the slide bearing bushing is pivotable from outside the pivot joint.

Preferably, the upper part of the pivot joint comprises an upwards inclined mounting bed for the side conveyor.

Preferably, the side conveyor comprises a side conveyor frame which is assembled from linear profiles.

Locking the side conveyor in the horizontal pivoting direction can be arranged by means of a locking pin or locking latch to be fitted between the lower part and the upper part of the pivot joint, the locking pin or latch being fastened into the locking position and released from the locking position.

The processing device may be provided with a locking device between the rear part of the frame and the discharge end of the side conveyor.

The side conveyor can be pivoted manually into different positions around the pivot joint. The side conveyor can, as needed, be directed into any operating direction in the 180 degree pivoting sector from the first side to the second side of the processing device. The side conveyor can be pivoted into operating positions to both sides of the processing device. The side conveyor can be mechanically locked into an operating position in a simple manner, for example, by a locking pin or locking latch arranged in connection with the pivot joint. An operator can execute the pivoting and locking into operating position of the side conveyor quickly and safely without lifting devices.

The side conveyor can be pivoted in the direction of the frame of the processing device into the transportation position. The side conveyor can be pivoted below the frame of the processing device into the transportation position. In the transportation position, the side conveyor can be mechanically locked in the pivoting direction, for example, by a locking pin arranged in connection with the pivot joint. Additionally or alternatively, (for example, when transporting the processing device in road traffic), an operator can lock the side conveyor to the frame of the processing device. A preferred manner is to lock the side conveyor by means of a rear side of the feed hopper, arranged in the frame of the processing device. The side conveyor can be fastened to the frame of the processing device, for example, at a discharge end of the side conveyor, by the rear side of the feed hopper, or by some other locking device arranged in the frame of the processing device.

The pivotable side conveyor is functionally superior, less expensive and safer than known solutions. The pivoting solution of the side conveyor is a simple mechanical structure operated by muscular power. The pivoting of the side conveyor into various positions and bringing into transport condition without hydraulic actuators can be seen as a special advantage. The hydraulic hoses moving the endless transportation base of the side conveyor, such as a conveyor belt, can be kept connected at all times. There is also no need to detach electric cables. The side conveyor does not need to be detached from the processing device in order to bring it into the transportation condition, to transport it, nor to change the side. Pivoting or transporting the side conveyor does not require lifting devices, nor any other tools. Changing the side of the side conveyor or placing it into the transport position can be achieved quickly by a single operator. Safety can be improved because lifting work and the removal of hydraulic hoses is not necessary. In some known side conveyor solutions, in connection with putting it into operating condition, it is necessary to tighten and position the conveyor belt, which can be avoided in the solution of the invention.

The side conveyor can be momentarily pivoted away from its operating position and returned back to the operating position. The side conveyor can be pivoted, for example, aside out of the way of a pile, if there is a desire to remove material by a wheel loader as efficiently as possible.

While the processing device is in operation, the side conveyor can also be pivoted into a protected state away from the operating position, if there is no desire to use the side conveyor. Further, during transportation, the side conveyor does not take up space around the movable processing device or on the worksite.

Various embodiments of the present invention are or have been illustrated only with reference to one or some aspects of the invention. It is clear to a person skilled in the art that any embodiment of an aspect of the invention may be applied in the same aspect and other aspects either by itself or in connection with various other embodiments.

### BRIEF DESCRIPTION OF THE FIGURES

The invention will now be described, by way of example, with reference to the accompanying drawings in which:
Fig. 1 shows a movable mineral material processing device according to one preferred embodiment, comprising a side conveyor which can be pivoted from one side of the processing device to the other;
Fig. 2 shows the processing device of Fig. 1 as viewed from the rear in the direction of the arrow A of Fig. 1, and the side conveyor is pivoted to the side of the processing device;
Fig. 3 shows the processing device of Fig. 1 as viewed from the side, and the side conveyor is pivoted rearwards, below the frame of the processing device;
Fig. 4 shows a pivoting area of the side conveyor of the processing device of Fig. 1;
   and
Fig. 5 shows a pivot joint of a side conveyor according to one preferred embodiment.

### DETAILED DESCRIPTION

In the following description like reference signs denote like parts. It should be realized that the presented figures are not in scale as a whole, and they serve merely to illustrate the embodiments of the invention.

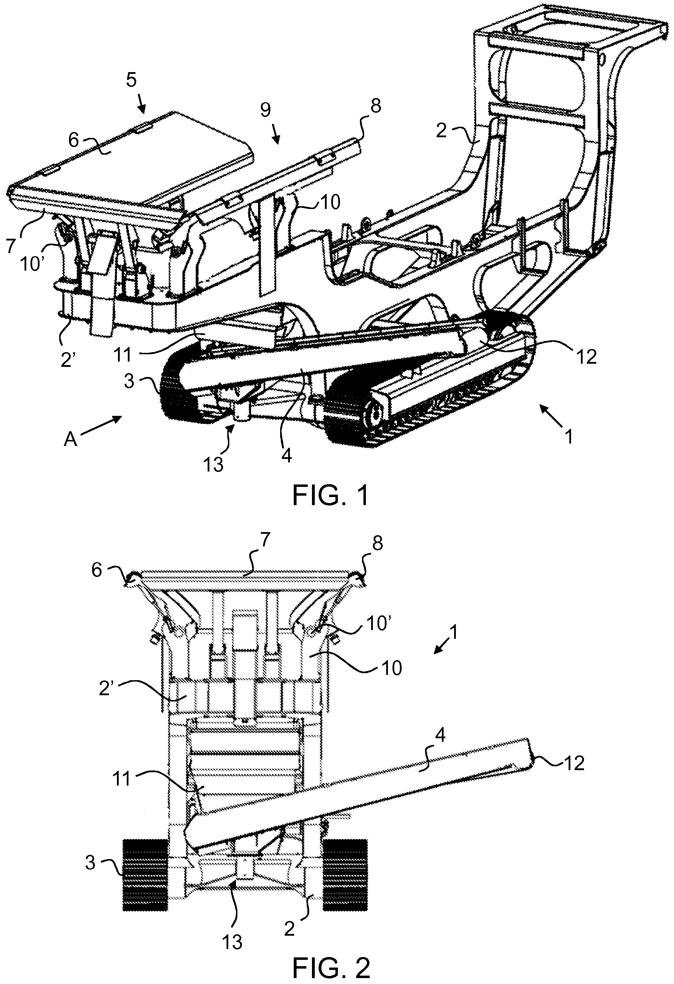

Figs. 1-4 show a movable mineral material processing device 1 comprising a frame 2. The processing device comprises tracks 3 fastened to the frame for moving the processing device, and a side conveyor 4 which can be pivoted from one side of the processing device to the other. The processing device may be provided, for example, with means for screening, conveying and/or crushing (not shown in the figures) mineral material. The crushing means may comprise, for example, a cone, gyratory, or impact crusher.

A movable, i.e., mobile processing device may also be moved by wheels, skids or legs. An alternative for moving the processing device is forming the frame of the processing device as a base with wheels to be towed by a vehicle.

In Fig. 1, in the rear part 2' of the frame 2 there is arranged a feed hopper 5 through which material to be processed is received into the processing device. The sides 6, 7, and 8 forming the feed hopper can be folded away from an operating position. Between the sides of and below the feed hopper, there is placed a feeder (not shown in the figures) with which the material fed into the feed hopper is fed forwards through an open front part 9 of the feed hopper. The feed hopper comprises a first lateral side 6, a rear side 7 and a second lateral side 8 which are fastened to the frame 2 with supports 10. The supports 10 are provided with pivot joints 10' for folding the lateral sides and the rear side down to the sides of the processing device 1, for example, during transportation and storage. When the sides 6, 7, and 8 of the feed hopper 5, provided with hydraulic actuators, are in a folded state, the feeder for material to be processed can be mounted on the frame 2. The feeder can be brought into the operating position by folding the sides of the feed hopper into the operating position. The mineral material screening, conveying and/or crushing means can be placed on the frame downstream of the feeder.

The desired material that is fine substance is guided via the feeder or through the feeder to fall via the material guide 11 onto the belt 12 of the side conveyor 4 or a corresponding endless transportation base in order that this material does not end up to be further processed. The starting end of the side conveyor 4 is preferably placed below the feeder.

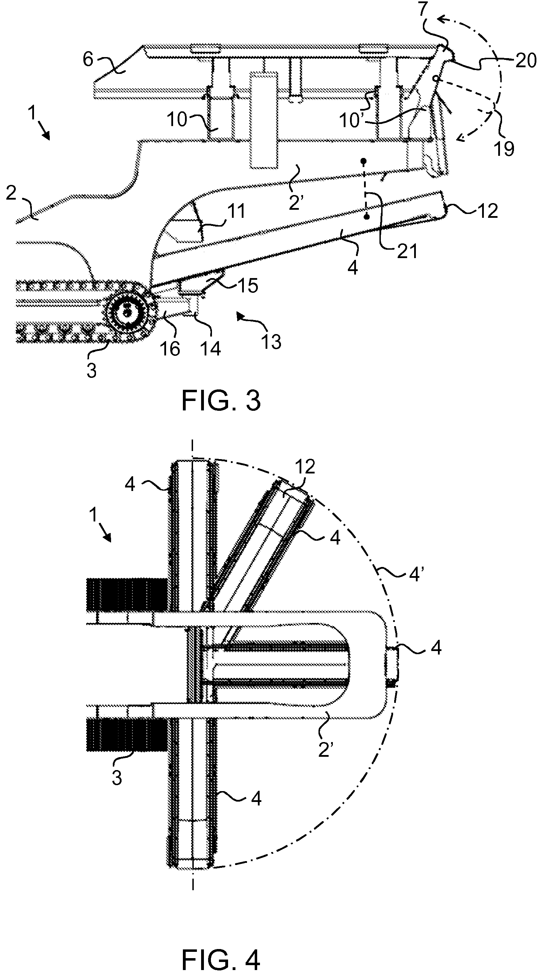

The side conveyor 4 can be pivoted from one side of the processing device 1 to the other. In the processing device 1 is arranged for the side conveyor a pivot joint 13 with which the side conveyor is fastened to the frame 2. The side conveyor can be pivoted as needed by manual force around the pivot joint into various positions. The side conveyor can be directed as needed to any direction in a 180 degree pivoting sector 4' from the first side of the processing device to the other side (Fig. 4). The side conveyor can be pivoted between operating positions and a transportation position within the pivoting sector 4'.

At its simplest, the side conveyor can be pivoted to one side of the processing device into the operating position. Preferably, the side conveyor can be pivoted into operating positions on both sides of the processing device. The side conveyor can be arranged into an operating position to any direction within the area of the pivoting sector 4'.

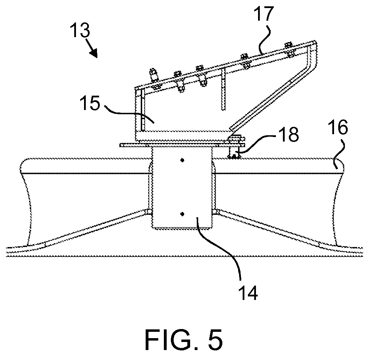

Fig. 5 shows a pivot joint 13 comprising a lower part 14 and an upper part 15. The lower part and the upper part form with each other a pivot joint, preferably having the lower part functioning as a housing into which the shaft-like part of the upper part is mounted with slide bearings. In the housing are arranged suitable lubrication and the necessary number of bearing elements to enable manual pivoting of the joint. At the side of the housing, there are preferably arranged lubrication nipples. Between the housing of the lower part and the shaft of the upper part, there may be fitted a plastic bearing bushing.

According to some embodiments, manual pivoting of the side conveyor can be assisted instead of pivoting force applied directly to the side conveyor, or in addition to it. Between the housing of the lower part and the shaft of the upper part of the pivot joint, there may be arranged a slide bearing bushing, the first axis of symmetry of which, defined by the external sliding surfaces, and the second axis of symmetry of which, defined by the internal sliding surfaces, are at an angular position with each other, and the slide bearing bushing is pivotable from outside the pivot joint. Such a slide bearing bushing provided with a pivoting axis inclined from the vertical direction may be provided with a pivot lever for an operator.

The lower part 14 of the pivot joint is provided with a fastening member 16 through which the lower part is fastened to the frame 2, for example, to the rear beam of the frame. The fastening member 16 is preferably a sheet-structured projection beam which is fastened by welding to the frame of the processing device. The upper part 15 of the pivot joint is provided with a mounting bed 17 to which the side conveyor 4 is fastened. The inclination of the mounting surface of the mounting bed 17 in relation to the support surface of the processing device (the surface of the earth) is preferably selected such that the frame structure of a side conveyor manufactured from linear profiles can be simply mounted on the mounting bed. In this manner, it is possible to stick to small amounts of parts to be manufactured and assembled and to save on manufacturing expenses of the side conveyor.

The side conveyor 4 can be locked in its pivoting direction into one or more operating positions, as well as into the transportation position as needed. Locking of the pivoting direction is implemented, for example, by a locking pin 18 arranged in connection with the pivot joint 13. In locking positions, the locking pin 18 penetrates the holes formed in the upper part 15 and the lower part 14 of the pivot joint or corresponding interacting locking forms for a locking pin. The operator can perform pivoting of the side conveyor and its locking into various positions quickly and safely without lifting devices.

The transportation position of the side conveyor 4 is illustrated by means of Fig. 4 in which the side conveyor 4 has been pivoted into a direction of the processing device 1. Preferably, the side conveyor 4 is under the frame 2 of the processing device in the transportation position. The outer dimensions of the processing device thus do not at least significantly increase when the side conveyor is in the transportation position. The width of the processing device does not need to be increased in order to bring the side conveyor into the transportation position, and the lengthening of the processing device to a small degree is not nearly as harmful as widening. Naturally, the side conveyor may also be arranged to discharge in the direction of the processing device (rearwards). In the transportation position, the side conveyor can be mechanically locked in the pivoting direction by a locking pin 18, but other manners of locking may also be used.

Fig. 3 shows alternative locking devices for keeping the side conveyor 4 in place in the transportation position. A preferred manner is to lock the side conveyor to the frame of the processing device. In this case, the frame supports a part of the free end of the side conveyor which indeed is not necessary in all embodiments. The side conveyor can be locked to the frame of the processing device, for example, by means of the rear side 7 of the feed hopper which is fastened to the rear part 2' of the frame. The rear side 7 is folded down in the transportation position in order that the processing device is not too tall for transportation. The side conveyor 4 that has been pivoted to the direction of the rear side can be locked by a suitable locking member 19 (for example, a hook) arranged at the rear side 7. In the rear side, a locking shape 20 can be made such that the side conveyor 4 locks into the transportation position in the lower position of the rear side. Between the rear part 2' of the frame which, while the side conveyor has been pivoted in the direction of the frame, extends above the side conveyor, and the side conveyor, there can be arranged a fastening member 21 that can be removed and fastened (for example, a threaded rod, a turnbuckle, a chain).

Shaping of the rear part 2' of the frame 2 of the processing device and combining of the pivot joint 13, that enables the pivoting of the side conveyor 14, with a suitably shaped rear part 2', have a significant role in free pivotability of the side conveyor. After the tracks 3, the rear part 2' opens rearwards in a highly upwards inclined direction, when the processing device 1 is viewed from the side. On the side of the frame of the processing device, there are not arranged horizontal beams that in known frames are directed horizontally rearwards (after the tracks), and from the aperture formed by these horizontal beams above them, a detachable and attachable known side conveyor is mounted inside the frame below the feeder. Thus, it has been possible to make the frame 2 cost-effective. The projection of the frame, as viewed from above, in some embodiments covers below the projection the side conveyor which is directed rearwards. Further, the frame 2 provides, below the rear part 2', an adequately high free space for pivoting the side conveyor from one side to the other and rearwards. At the same time, the frame is suitably high for mounting the feeder directly on the rear part 2' of the frame without a separate subframe, which further contributes to the cost-effectiveness of the structure solution of the processing device.

The foregoing description provides non-limiting examples of some embodiments of the invention. It is however clear to a person skilled in the art that the invention is not restricted to details of the embodiments presented above, but that it can be implemented using equivalent means. Some of the features of the above-disclosed embodiments may be used to advantage without the corresponding use of other features.

As such, the foregoing description shall be considered as merely illustrative of the principles of the present invention, and not in limitation thereof. Hence, the scope of the invention is only restricted by the appended claims.

## Claims

1. A movable processing device (1) for processing mineral material, comprising
a movable frame (2),
a side conveyor (4) fastened to the frame,
a pivot joint (13) of the side conveyor which pivot joint is fastened between the side conveyor (4) and the frame (2),
wherein the side conveyor is horizontally pivotable around the pivot joint into one or more operating positions on at least one side of the processing device,
the side conveyor is horizontally pivotable around the pivot joint into a transportation position, and
the transportation position of the side conveyor (4) is below the frame (2, 2') of the processing device such that during transportation, the side conveyor does not take up space around the movable processing device or on the worksite, and
the movable processing device further comprises a feeder and a material guide (11) for guiding desired material that is fine substance to fall through the feeder via the material guide (11) onto a belt (12) or a corresponding endless transportation base of the side conveyor (4) for guiding the desired material past further processing.

2. A processing device according to claim 1, **characterized in that** the side conveyor (4) is pivotable at least from a first side of the frame (2) to a direction of the frame into the transportation position such that the transportation width of the processing device is not exceeded.

3. A processing device according to claim 2, **characterized in that** the side conveyor (4) is pivotable to the first side of the frame (2), and to a second side of the frame, as well as into operating positions in a pivoting sector (4') between the first and second sides.

4. A processing device according to any one of claims 1-3, **characterized in that** a horizontal pivoting sector (4') of the side conveyor (4) is 180 degrees.

5. A processing device according to any one of claims 1-4, **characterized in that** the pivot joint (13) comprises a lower part (14) fastened to the frame (2), and an upper part (15) bearing-mounted to the lower part to which the side conveyor is fastened.

6. A processing device according to claim 5, **characterized in that** the lower part (14) of the pivot joint comprises a housing, and the upper part (15) comprises a shaft which is bearing-mounted in the housing.

7. A processing device according to claim 6, **characterized in that** between the housing of the lower part and the shaft of the upper part of the pivot joint is fitted a slide bearing bushing, a first axis of symmetry of which, defined by external sliding surfaces, and a second axis of symmetry of which, defined by internal sliding surfaces, are at an angular position with each other and the slide bearing bushing is pivotable from outside the pivot joint.

8. A processing device according to any one of claims 5-7, **characterized in that** the upper part (15) of the pivot joint (13) comprises an upwards inclined mounting bed (17) for the side conveyor (4).

9. A processing device according to any one of claims 1-8, **characterized in that** the side conveyor (4) comprises a side conveyor frame which is assembled from linear profiles.

10. A processing device according to any one of claims 1-9, **characterized in that** locking the side conveyor (4) in a horizontal pivoting direction is arranged by means of a locking pin (18) or a locking latch to be fitted between the lower part (14) and the upper part (15) of the pivot joint (13), the locking pin or latch being fastenable into a locking position and releasable from the locking position.

11. A processing device according to any one of claims 1-10, **characterized in that** the processing device (1) is provided with a locking device (19, 20, 21) between the rear part (2') of the frame (2) and the discharge end of the side conveyor (4).

## Patentansprüche

1. Bewegliche Verarbeitungsvorrichtung (1) zur Verarbeitung von mineralischem Material, umfassend:
einen beweglichen Rahmen (2),
einen am Rahmen befestigten Seitenförderer (4),
ein Drehgelenk (13) des Seitenförderers, wobei das Drehgelenk zwischen dem Seitenförderer (4) und dem Rahmen (2) befestigt ist,
wobei der Seitenförderer um das Drehgelenk horizontal in eine oder mehrere Betriebspositionen auf mindestens einer Seite der Verarbeitungsvorrichtung schwenkbar ist,
der Seitenförderer um das Drehgelenk horizontal in eine Transportposition schwenkbar ist, und
die Transportposition des Seitenförderers (4) sich unterhalb des Rahmens (2, 2') der Verarbeitungsvorrichtung befindet, so dass der Seitenförderer während des Transports keinen Raum um die bewegliche Verarbeitungsvorrichtung herum oder am Einsatzort beansprucht, und
die bewegliche Verarbeitungsvorrichtung ferner eine Zuführvorrichtung und eine Materialführung (11) umfasst, um gewünschtes Material, bei dem es sich um einen Feinstoff handelt, so zu führen, dass es durch die Zuführvorrichtung über die Materialführung (11) auf ein Gurtband (12) oder eine entsprechende Endlostransportbasis des Seitenförderers (4) fällt, um das gewünschte Material an der Weiterverarbeitung vorbeizuführen.

2. Verarbeitungsvorrichtung nach Anspruch 1, **gekennzeichnet dadurch, dass** der Seitenförderer (4) mindestens ausgehend von einer ersten Seite des Rahmens (2) hin zu einer Richtung des Rahmens in die Transportposition schwenkbar ist, so dass die Transportbreite der Verarbeitungsvorrichtung nicht überschritten wird.

3. Verarbeitungsvorrichtung nach Anspruch 2, **gekennzeichnet dadurch, dass** der Seitenförderer (4) zur ersten Seite des Rahmens (2) und zu einer zweiten Seite des Rahmens sowie zu Betriebsstellungen in einem Schwenksektor (4') zwischen der ersten und zweiten Seite schwenkbar ist.

4. Verarbeitungsvorrichtung nach einem der Ansprüche 1 bis 3, **gekennzeichnet dadurch, dass** ein horizontaler Schwenksektor (4') des Seitenförderers (4) 180 Grad beträgt.

5. Verarbeitungsvorrichtung nach einem der Ansprüche 1 bis 4, **gekennzeichnet dadurch, dass** das Drehgelenk (13) einen am Rahmen (2) befestigten unteren Teil (14) und einen am unteren Teil gelagerten oberen Teil (15), an dem der Seitenförderer befestigt ist, umfasst.

6. Verarbeitungsvorrichtung nach Anspruch 5, **gekennzeichnet dadurch, dass** der untere Teil (14) des Drehgelenks ein Gehäuse umfasst und der obere Teil (15) eine im Gehäuse gelagerte Welle umfasst.

7. Verarbeitungsvorrichtung nach Anspruch 6, **gekennzeichnet dadurch, dass** zwischen dem Gehäuse des unteren Teils und der Welle des oberen Teils des Drehgelenks eine Gleitlagerbuchse montiert ist, bei der eine erste Symmetrieachse, die durch äußere Gleitflächen definiert ist, und eine zweite Symmetrieachse, die durch innere Gleitflächen definiert ist, in einer Winkellage zueinander stehen und die Gleitlagerbuchse von außerhalb des Drehgelenks schwenkbar ist.

8. Verarbeitungsvorrichtung nach einem der Ansprüche 5 bis 7, **gekennzeichnet dadurch, dass** der obere Teil (15) des Drehgelenks (13) ein nach oben geneigtes Montagebett (17) für den Seitenförderer (4) umfasst.

9. Verarbeitungsvorrichtung nach einem der Ansprüche 1 bis 8, **gekennzeichnet dadurch, dass** der Seitenförderer (4) einen Seitenfördererrahmen umfasst, der aus linearen Profilen zusammengebaut ist.

10. Verarbeitungsvorrichtung nach einem der Ansprüche 1 bis 9, **gekennzeichnet dadurch, dass** eine Verriegelung des Seitenförderers (4) in horizontaler Schwenkrichtung mittels eines Verriegelungsstifts (18) oder einer zwischen dem unteren Teil (14) und dem oberen Teil (15) des Drehgelenks (13) zu montierenden Verriegelungsklinke eingerichtet ist, wobei der Verriegelungsstift oder die Verriegelungsklinke sich in eine Verriegelungsstellung arretieren lassen und aus der Verriegelungsstellung lösen lässt.

11. Verarbeitungsvorrichtung nach einem der Ansprüche 1 bis 10, **gekennzeichnet dadurch, dass** die Verarbeitungsvorrichtung (1) mit einer Verriegelungsvorrichtung (19, 20, 21) zwischen dem hinteren Ende (2') des Rahmens (2) und dem Austragsende des Seitenförderers (4) versehen ist.

## Revendications

1. Dispositif de traitement mobile (1) pour traiter un matériau minéral, comprenant :
un châssis mobile (2),
un convoyeur latéral (4) fixé au châssis,
une articulation pivotante (13) du convoyeur latéral, ladite articulation pivotante étant fixée entre le convoyeur latéral (4) et le châssis (2),
dans lequel le convoyeur latéral peut pivoter horizontalement autour de l'articulation pivotante dans une ou plusieurs positions de fonctionnement sur au moins un côté du dispositif de traitement,
le convoyeur latéral peut pivoter horizontalement autour de l'articulation pivotante dans une position de transport, et
la position de transport du convoyeur latéral (4) est située en dessous du châssis (2, 2') du dispositif de traitement de telle sorte que, pendant le transport, le convoyeur latéral n'occupe aucun espace autour du traitement de dispositif mobile ou sur le lieu d'utilisation, et
le dispositif de traitement mobile comprend également un dispositif d'alimentation et un guide de matériau (11) pour guider le matériau souhaité, qui est une substance fine, de telle sorte qu'il tombe à travers le dispositif d'alimentation par le biais du guide de matériau (11) sur une bande (12) ou une base de transport sans fin correspondante du convoyeur latéral (4) afin de guider le matériau souhaité au-delà d'un traitement ultérieur.

2. Dispositif de traitement selon la revendication 1, **caractérisé en ce que** le convoyeur latéral (4) peut pivoter au moins depuis un premier côté du châssis (2) vers une direction du châssis dans la position de transport de telle sorte que la largeur de transport du dispositif de traitement ne soit pas dépassée.

3. Dispositif de traitement selon la revendication 2, **caractérisé en ce que** le convoyeur latéral (4) peut pivoter vers le premier côté du châssis (2) et vers un deuxième côté du châssis, ainsi que vers des positions de fonctionnement dans un secteur de pivotement (4') entre les premier et deuxième côtés.

4. Dispositif de traitement selon l'une des revendications 1 à 3, **caractérisé en ce qu'**un secteur de pivotement horizontal (4') du convoyeur latéral (4) est de 180 degrés.

5. Dispositif de traitement selon l'une des revendications 1 à 4, **caractérisé en ce que** l'articulation pivotante (13) comprend une partie inférieure (14) fixée au châssis (2) et une partie supérieure (15) montée sur palier sur la partie inférieure à laquelle le convoyeur latéral est fixé.

6. Dispositif de traitement selon la revendication 5, **caractérisé en ce que** la partie inférieure (14) de l'articulation pivotante comprend un boîtier, et la partie supérieure (15) comprend un arbre qui est monté sur palier dans le boîtier.

7. Dispositif de traitement selon la revendication 6, **caractérisé en ce que**, entre le boîtier de la partie inférieure et l'arbre de la partie supérieure de l'articulation pivotante, est monté un coussinet de palier lisse dont un premier axe de symétrie, défini par des surfaces de glissement externes, et un deuxième axe de symétrie, défini par des surfaces de glissement internes, sont situés dans une position angulaire l'un par rapport à l'autre, et le coussinet de palier lisse peut pivoter depuis l'extérieur de l'articulation pivotante.

8. Dispositif de traitement selon l'une des revendications 5 à 7, **caractérisé en ce que** la partie supérieure (15) de l'articulation pivotante (13) comprend un lit de montage incliné vers le haut (17) pour le convoyeur latéral (4).

9. Dispositif de traitement selon l'une des revendications 1 à 8, **caractérisé en ce que** le convoyeur latéral (4) comprend un châssis de convoyeur latéral qui est assemblé à partir de profilés linéaires.

10. Dispositif de traitement selon l'une des revendications 1 à 9, **caractérisé en ce qu'**un verrouillage du convoyeur latéral (4) dans une direction de pivotement horizontale est assuré au moyen d'une goupille de verrouillage (18) ou d'un loquet de verrouillage à monter entre la partie inférieure (14) et la partie supérieure (15) de l'articulation pivotante (13), la goupille ou le loquet de verrouillage pouvant être fixé(e) dans une position de verrouillage et libéré(e) de la position de verrouillage.

11. Dispositif de traitement selon l'une des revendications 1 à 10, **caractérisé en ce que** le dispositif de traitement (1) est muni d'un dispositif de verrouillage (19, 20, 21) entre la partie arrière (2') du châssis (2) et l'extrémité de déversement du convoyeur latéral (4).
